# EUROPEAN PATENT SPECIFICATION

(11) **EP 2 535 750 B1**
(45) Date of publication and mention of the grant of the patent: **14.05.2014**
(21) Application number: 11170069.6
(22) Date of filing: 15.06.2011
(51) Int. Cl.: G02B 6/44

(54) **Fiber management device with staggered optical transport tube mounting locations**
Faserverwaltungsvorrichtung mit versetzten Montierstellen für optische Transportleitungen
Dispositif de gestion de fibres doté d'emplacements décalés de montage de tubes de transport optique

(43) Date of publication of application: 19.12.2012
(73) Proprietor: Tyco Electronics Raychem BVBA, 3010 Kessel-Lo (BE)
(72) Inventor: Pieck, Amandus, 3472 Kortenaken (BE); Vos, Bart, 2440 Geel (BE)
(74) Representative: Obst, Bernhard

(56) References cited:
- WO-A1-2010/036549
- WO-A2-94/12904
- US-A1- 2010 284 661

## Description

### BACKGROUND

Fiber optic communication systems are becoming prevalent in part because service providers want to deliver high bandwidth communication capabilities (e.g., data and voice) to customers. Fiber optic communication systems employ a network of fiber optic cables to transmit large volumes of data and voice signals over relatively long distances. The ability to effectively manage optical fibers and optical components is an important part of most fiber optic communication systems. Fiber management trays are often used to facilitate managing excess fiber length needed for efficiently providing optical splices between optical fibers. Fiber storage on fiber management trays is often provided in the form of slack fiber loops. Fiber management trays are also used to support optical components such as optical splitters (e.g., optical power splitters and wavelength division multiplexers (WDM)) and splice sleeves. An example fiber management device having fiber management trays is disclosed by International Publication No. WO 94/12904.

The '904 publication discloses a fiber management device including a series of stacked splice trays that are pivotally connected to a tray mounting member. Transport tubes are used to protect optical fibers routed to the splice trays and between the splice trays. The transport tubes are secured directly to main bodies of the splice trays. Because of the stacked configuration of the splice trays, the maximum height of the portion of any transport tube secured to the splice tray is limited by the height of the splice tray to which the transport tube is secured.

In the fiber optic telecommunications industry, there is constant commercial pressure to provide higher fiber densities. For this reason, there is a need to provide higher fiber counts on fiber management trays while concurrently keeping the fiber management trays the same size or reducing the size of the fiber management trays. However, to manage and protect increased fiber counts, transport tubes having larger outer dimensions are needed. Thus, an inherent conflict exists between the need to minimize fiber management trays sizes while concurrently using transport tubes to protect larger numbers of optical fibers routed to the fiber management trays.

### SUMMARY

One aspect of the present disclosure relates to a fiber management device including a first fiber management tray and a second fiber management tray. Each of the first and second fiber management trays defines at least one optical fiber routing path and an optical component mounting location. The second fiber management tray is stacked closely on top of the first fiber management tray to keep the space occupied by the tray stack as small as possible. A reference plane is defined between the first and second stacked fiber management trays. The first fiber management tray defines a first transport tube mounting location and the second fiber management tray defines a second transport tube mounting location. The first and second transport tube mounting locations are staggered relative to one another in a lateral orientation. The fiber management device also includes a clearance region positioned directly above the first transport tube mounting location. The clearance region extends above the reference plane. An optical fiber transport tube is secured on the first transport tube mounting location. The optical fiber transport tube has an outer dimension (e.g., an outer diameter) larger than a tray height of the first fiber management tray. The optical fiber transport tube is secured to the first transport tube mounting location with the outer dimension extending in the same orientation as the tray height. As so mounted, the optical fiber transport tube is intersected by the reference plane and includes an upper portion that extends into the clearance region. In this way, the fiber management device can utilize fiber management trays having relatively small heights in combination with optical fiber transport tubes having larger outer dimensions (e.g., outer diameters) than the tray heights. This assists in increasing the overall fiber density of the system by allowing relatively large numbers of optical fibers to be routed to fiber management trays having relatively small heights. Thus, the outer dimensions (e.g., outer diameters) of the optical fiber transport tubes are not factors that constrain or limit the overall fiber density of the fiber management device. In certain embodiments, the transport tube mounting locations can be integrated into the fiber management trays such that the trays themselves have different configurations. In other embodiments, the transport tube mounting locations can be provided on fixation modules that attach to the fiber management trays to customize the transport tube mounting location of each of the trays.

Another aspect of the present disclosure relates to a fiber management device including a fiber management tray defining at least one optical fiber routing path and an optical component mounting location. The fiber management tray includes a tray main body defining a plurality of fixation module mounting locations that are laterally spaced-apart from one another on the tray main body. The fiber management tray also includes a fixation module that is mountable at a selected one of the fixation module mounting locations. The fixation module defines a transport tube mounting location for supporting an optical fiber transport tube secured to the first fixation module. When multiple fiber management trays are stacked, the fixation module mounting locations for each of the fiber management trays can be selected such that the fixation modules corresponding to adjacent fiber management trays in the stack are laterally staggered relative to one another. In this way, optical fiber transport tubes having outer diameters larger than the heights of the fiber management trays can be secured to the fiber management trays without interfering with adjacent fiber management trays of the stack. The use of fiber management trays having tray main bodies with multiple fixation module mounting locations combined with fixation modules that can be selectively attached to any one of the mounting locations is advantageous because offsets between the fiber transport tube mounting locations of adjacent trays in a stack can be provided without requiring two or more versions of the tray.

In certain embodiments of the present disclosure, fixation modules in accordance with the principles with the present disclosure can include recessed regions for receiving optical fiber transport tubes. The recessed regions are configured to allow optical fibers routed from optical fiber transport tubes to fiber management trays to enter the fiber management trays at suitable heights that prevent microbending of the optical fibers.

### BRIEF DESCRIPTION OF THE DRAWINGS

Figure 1 is a front, side and top perspective view of a fiber management device in accordance with the principles of the present disclosure;
Figure 2 is a rear, side and top perspective view of a fiber management device in accordance with the principles of the present disclosure;
Figure 3 is a side view of a portion of the fiber management device of Figure 1;
Figure 4 is a rear view of the fiber management device of Figure 1;
Figure 5 is a top view of a portion of the fiber management device of Figure 1;
Figure 6 is a top, front perspective view of a fiber management tray of the fiber management device of Figure 1, a fixation module is shown in a position prior to be attached to a tray main body of the fiber management tray;
Figure 6A is an enlarged view of a portion of the fiber management tray of Figure 5;
Figure 7 is a rear, top view of the fiber management tray of Figure 6 showing the fixation module attached to the tray main body and a supplemental optical fiber in a position prior to being installed;
Figure 7A is an enlarged view of a portion of Figure 7;
Figure 8 is a top, rear perspective view of the fiber management tray of Figure 6 with the supplemental optical fiber shown attached to the fixation module;
Figure 8A is an enlarged view of a portion of Figure 8;
Figure 9 is a top, front perspective of a fixation module of the fiber management tray of Figure 6, an end of an optical fiber transport tube is shown positioned above the fixation module;
Figure 10 shows the fixation module of Figure 9 with the optical fiber transport tube secured thereto with a tie-wrap member;
Figure 11 is a front, bottom side perspective view of the fixation module of Figure 10; and
Figure 12 is a side view of the fixation module of Figure 10.

### DETAILED DESCRIPTION

Aspects of the present disclosure relate to fiber management devices that can be used in fiber optic systems such as fiber-to-the-premises (FTTP) networks. In certain embodiments, the fiber management devices can be used as part of an optical fiber management system and can be incorporated into various system components that may be used in inside or outside environments. In certain embodiments, the fiber management devices can be used at a central office, at an exchange, at a head end or at a customer premises. In other embodiments, the fiber management trays can be mounted within environmentally sealed enclosures such as street cabinets, splice closures, domes, pedestals, wall boxes, fiber distribution hubs or other structures adapted for outside environmental use. The fiber management devices can also be used on structures such as telecommunication frames, racks, drawers, shelves, panels, closets or other structures.

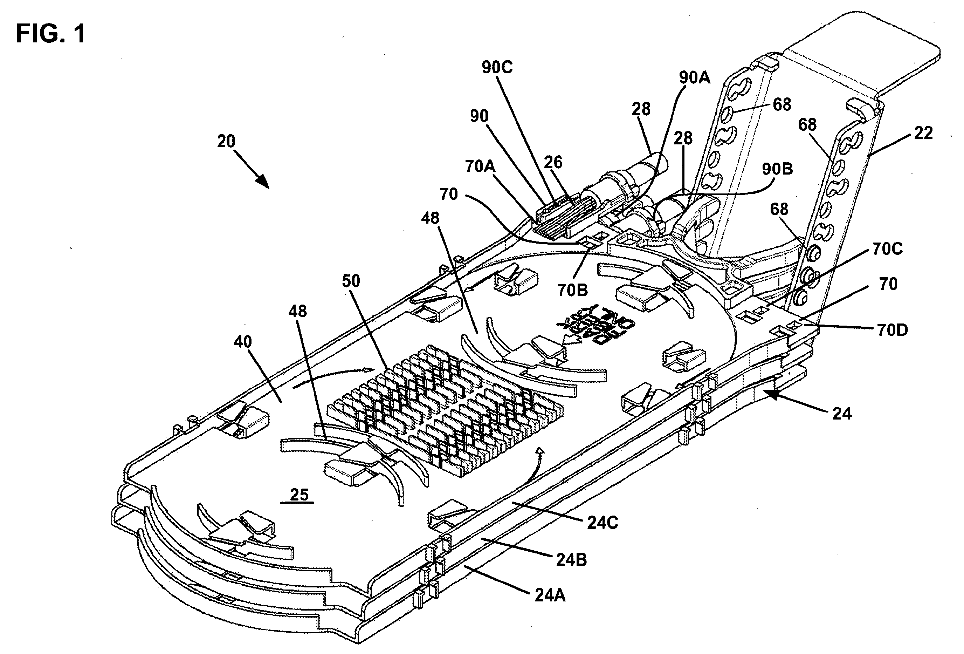

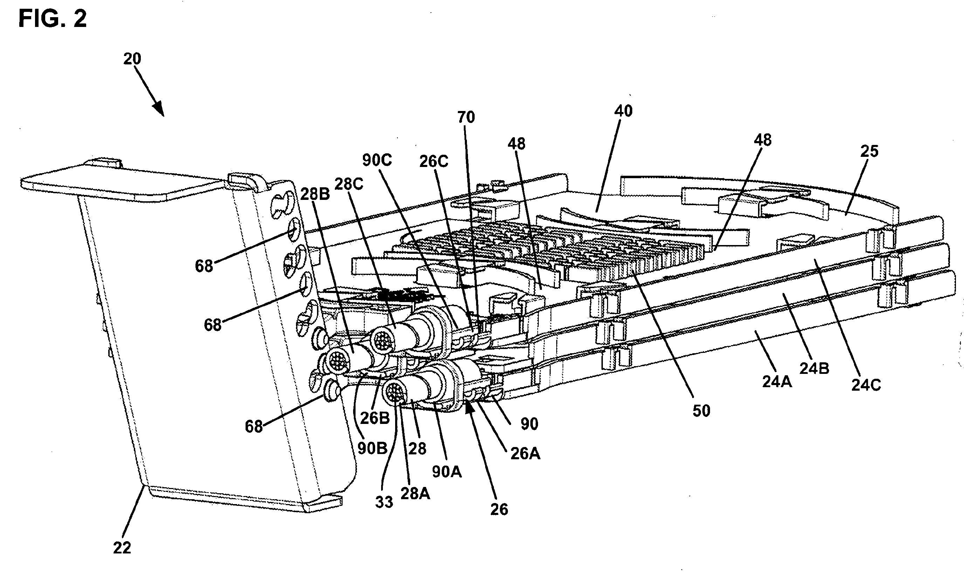

Figures 1 and 2 depict a fiber management device 20 in accordance with the principles of the present disclosure. The fiber management device 20 includes a tray mounting member 22 (e.g., a tray mounting plate, a tray mounting bracket, a tray mounting module, etc.) to which a plurality of fiber management trays 24 are pivotally mounted. As shown at Figure 1, the plurality of fiber management trays 24 includes a first fiber management tray 24A, a second fiber management tray 24B and a third fiber management tray 24C. The fiber management trays 24 are shown in a closely stacked configuration with the third fiber management tray 24C stacked on the second fiber management tray 24B and the second fiber management tray 24B stacked on the first fiber management tray 24A. The fiber management trays 24 can be pivoted relative to one another to facilitate accessing top sides 25 of the fiber management trays 24. While three fiber management trays 24 are shown mounted to the tray mounting member 22, it will be appreciated that the fiber management device 20 can include more or fewer than three fiber management trays 24.

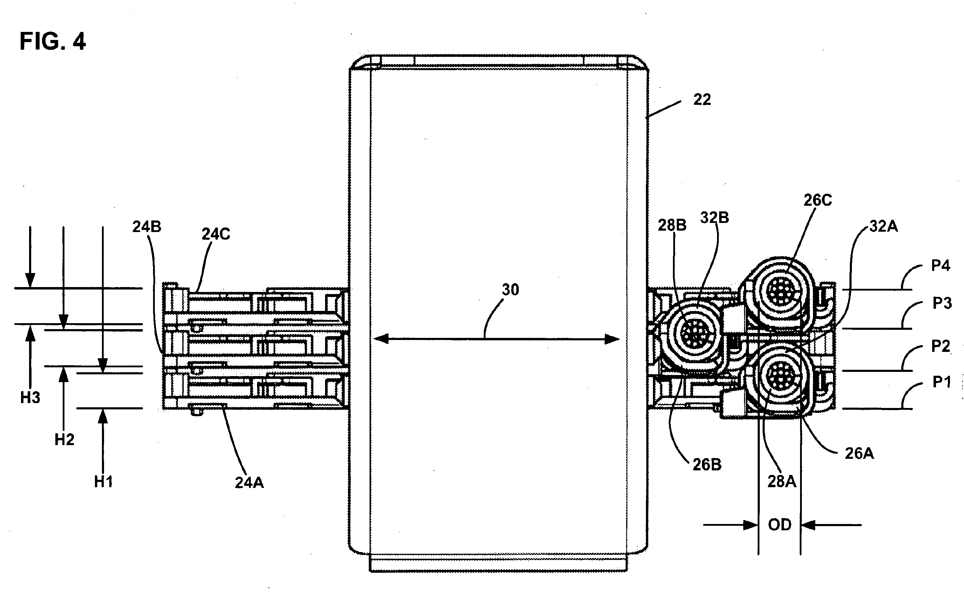

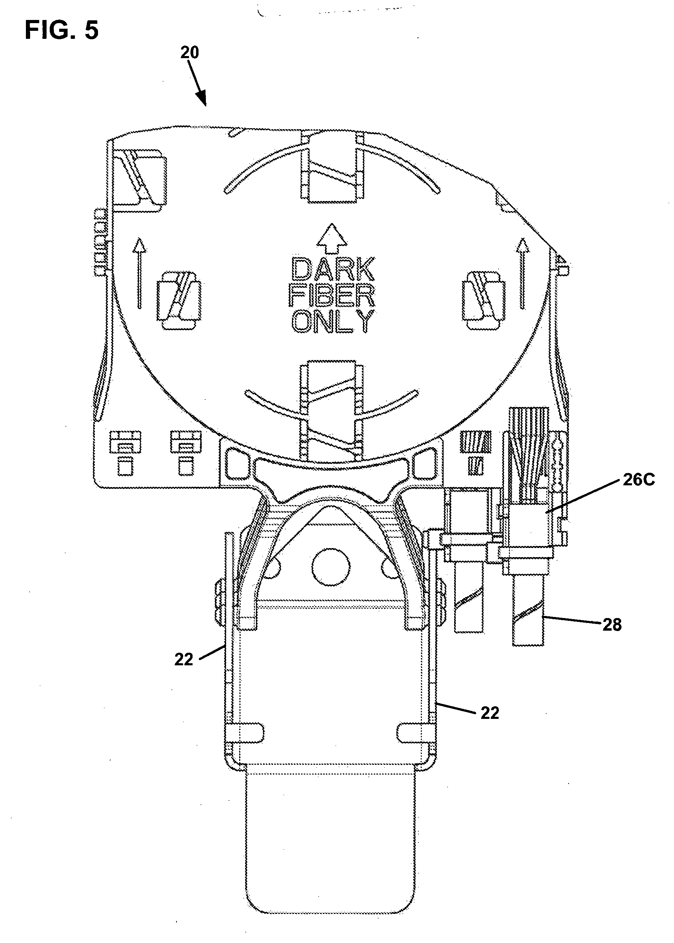

The fiber management device 20 includes a plurality of transport tube mounting locations 26 supporting optical fiber transport tubes 28 routed to the fiber management device 20. As shown at Figure 4, the transport tube mounting locations 26 include a first transport tube mounting location 26A provided at the first fiber management tray 24A, a second transport tube mounting location 26B provided at the second fiber management tray 24B and a third transport tube mounting location 26C provided at the third fiber management tray 24C. The optical fiber transport tubes 28 include a first transport tube 28A shown mounted to the first transport tube mounting location 26A, a second transport tube 28B shown mounted to the second transport tube mounting location 26B and a third transport tube 28C shown mounted to the third transport tube mounting location 26C. The second transport tube mounting location 26B is staggered in a lateral orientation 30 relative to the first and third transport tube mounting locations 26A, 26C (see Figure 4 and 5). By laterally staggering the second transport tube mounting location 26B with respect to the first transport tube mounting location 26A, a first clearance region 32A (see Figure 4) is provided directly above the first transport tube mounting location 26A. Similarly, by laterally staggering the third transport tube mounting location 26C relative to the second transport tube mounting location 26B, a second clearance region 32B (see Figure 4) is provided directly above the second transport tube mounting location 26B.

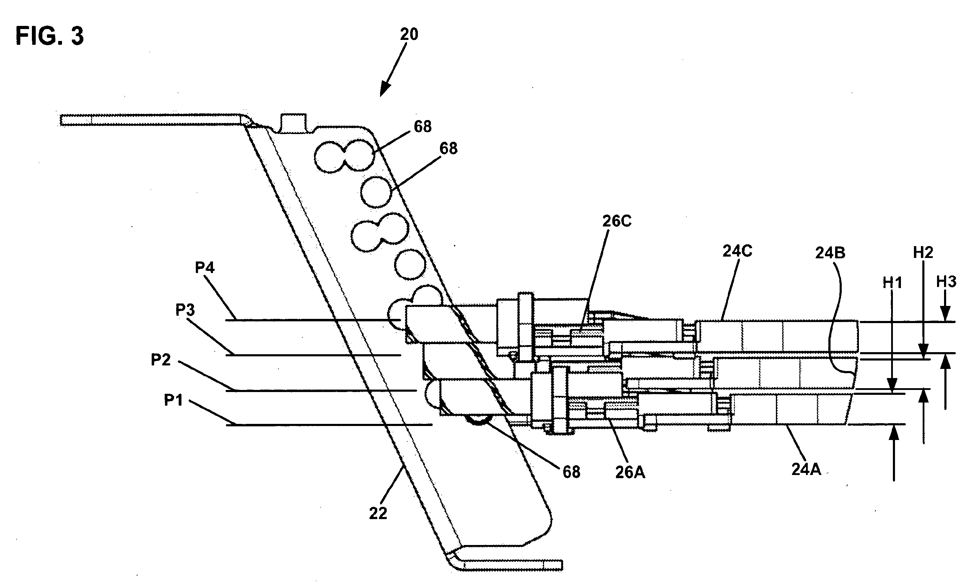

Referring to Figures 3 and 4, the stack of fiber management trays 24 defines a first reference plane P1 at the bottom of the first fiber management tray 24A, a second reference plane P2 between the first and second fiber management trays 24A, 24B, a third reference plane P3 between the second and third fiber management trays 24B, 24C, and a fourth reference plane P4 at the top of the third fiber management tray 24C. A first height H1 of the first fiber management tray 24A is defined between the first reference plane P1 and the second reference plane P2. A second height H2 of the second fiber management tray 24B as defined between the second reference plane P2 and the third reference plane P3. A third height H3 of the third fiber management tray 24C is defined between the third reference plane P3 and the fourth reference plane P4.

As shown at Figure 4, the optical fiber transport tubes 28 have outer dimensions OD (outer diameters) that are larger than the heights of the fiber management trays 24. The lateral staggering of the transportation tube mounting locations 26 and the resulting clearance regions 32A, 32B allows the fiber management device 20 to accommodate the optical fiber transport tubes 28 while maintaining a closely stacked tray configuration. The first transport tube 28A has a lower portion supported on the first tube mounting location 26A and an upper portion positioned within the first clearance region 32A. The first transport tube 28A is intersected by the second plane P2 such that the upper portion of the first transport tube 28A is positioned above the second plane P2. Similarly, the second transport tube 28B has a lower portion supported on the second tube mounting location 26B and an upper portion positioned within the second clearance region 32b. The second transport tube 28B is intersected by the third plane P3 such that the upper portion of the second transport tube 28B is positioned above the third plane P3. The clearance regions 32A, 32B also allow the outer diameters of the first and third transport tubes 28A, 28C to overlap the outer diameter of the second transport tube 28B (see Figure 4). Thus, the transport tubes 28 do not interfere with one another or with other fiber management trays 24 when the fiber management trays 24 are in the closely stacked configuration of Figures 1 and 2.

The transport tubes 28 are similar to buffer tubes/furcation tubes and function to protect, group and manage optical fibers 33 routed away from the fiber management trays 24 or between the fiber management trays 24. In the depicted embodiment, the transport tubes 28 have circular outer diameters and are depicted as outer jackets/tubes that have been cut by a continuous spiral slot to promote flexibility. In other embodiments, the optical fiber transport tubes 28 can have other transverse cross-sectional shapes such as oval shapes. Regardless of the shapes of the transport tubes 28, the staggered configuration of the transport tube mounting locations 26 allows the transport tubes 28 to have outer dimensions greater than the heights of the fiber management trays 24. Thus, even when the fiber management trays 24 are arranged in a closely stacked configuration, the transport tubes 28 can be mounted at the transport tube mounting locations 26 with the outer dimensions oriented in the same orientation as the heights of the fiber management trays 24.

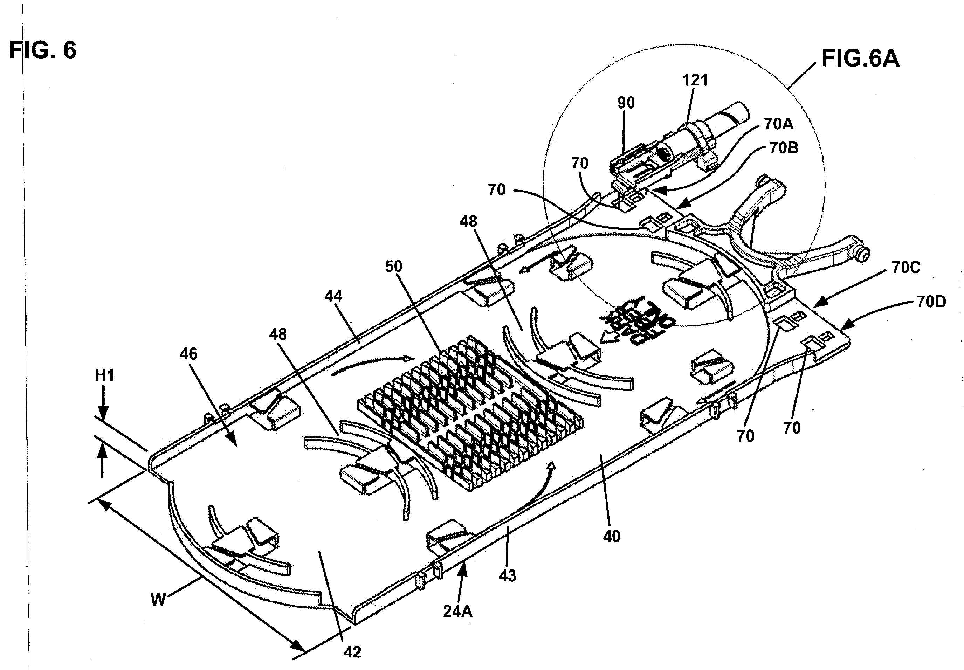

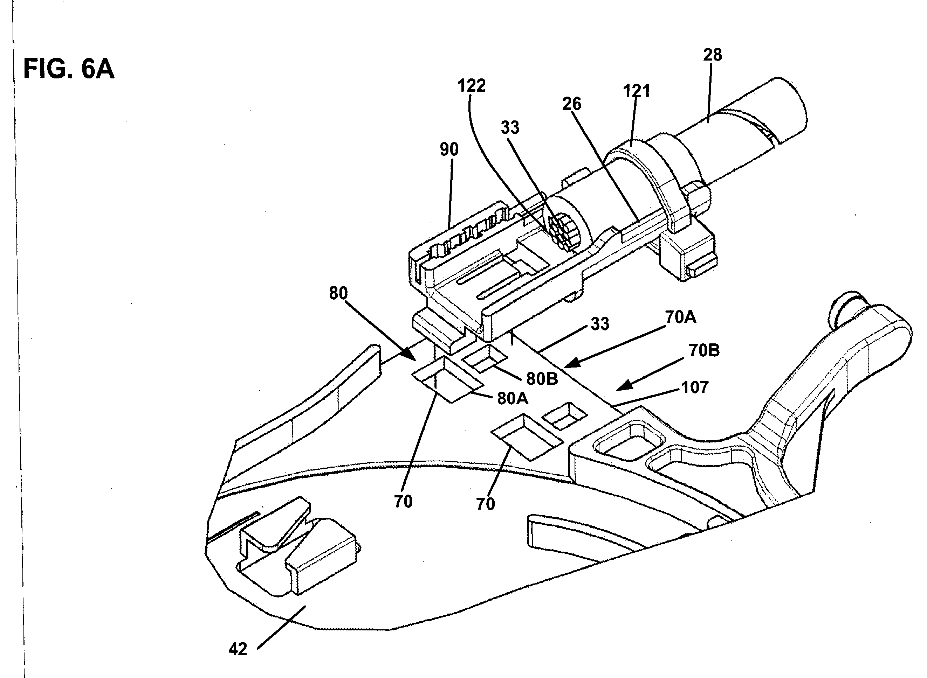

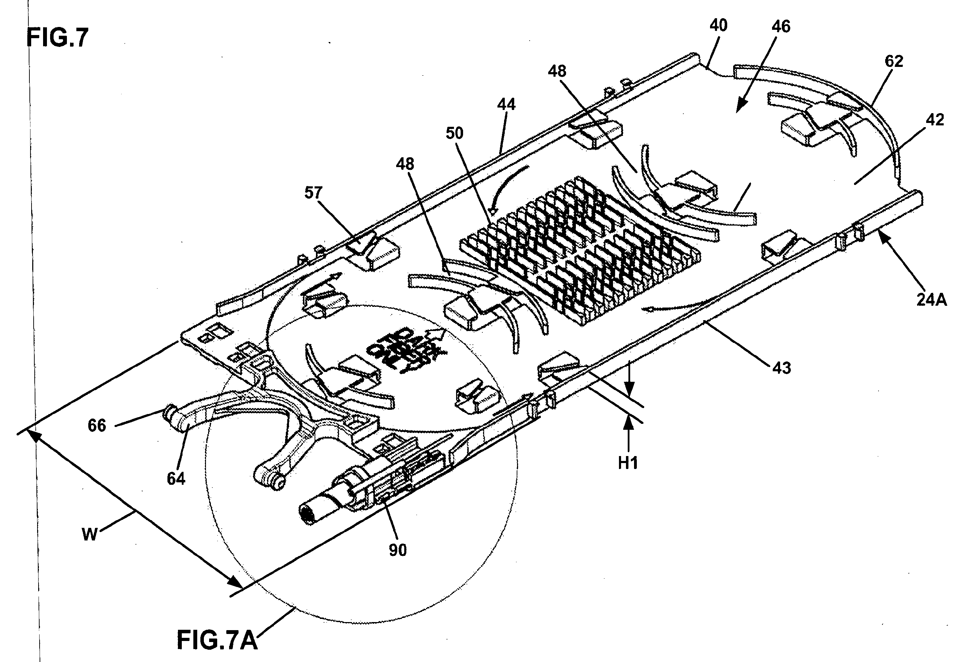

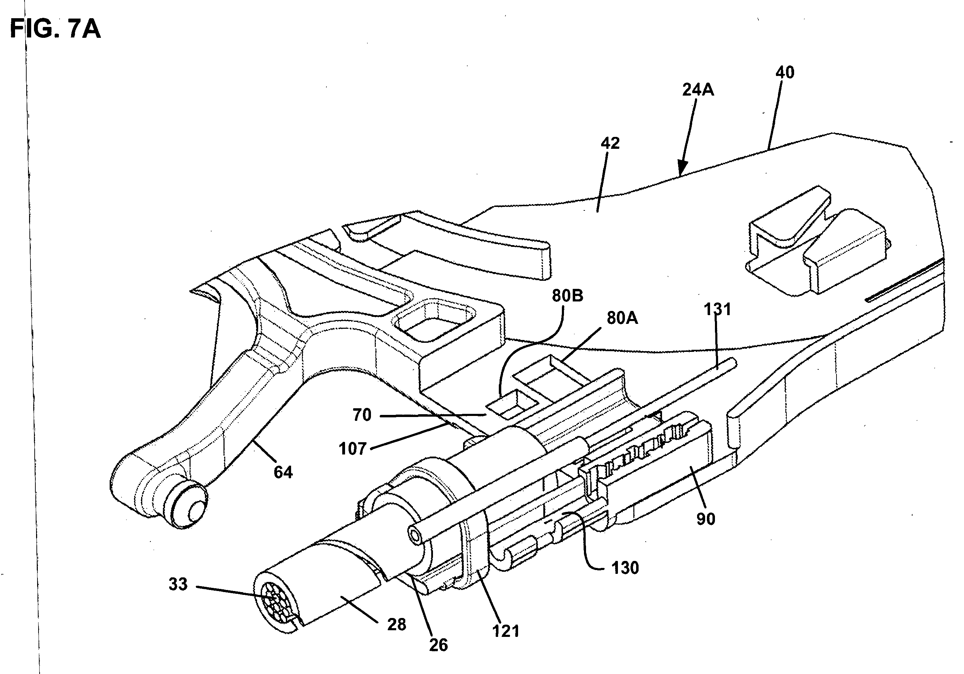

Figures 6 and 7 show the first fiber management tray 24A in isolation from the remainder of the fiber management device 20. The first fiber management tray 24A includes a tray main body 40 including a base 42 and a side wall structure 44. The side wall structure 44 extends around a perimeter 43 of the base 42 and projects upwardly from the base 42. The base 42 and the side wall structure 44 cooperate to define an interior region 46 of the first fiber management tray 24A. The first fiber management tray 24A defines fiber routing paths 48 within the interior region 46. The fiber routing paths 48 can be used for providing slack loop storage of excess fiber length. The fiber routing paths 48 can also be adapted to route optical fibers to an optical component mounting location 50 for mounting optical components such as splice sleeves, optical power splitters, and wavelength division multiplexers. The fiber routing paths 48 can be defined in part by structures such as tabs 51, curved fiber guide members 52 and the side wall structure 44. The height H1 of the first fiber management 24A is defined between an underside of the base 42 and a top edge of the side wall structure 44. It will be appreciated that the second and third fiber management trays 24B, 24C can have the same structural components as the first fiber management tray 24A.

The tray main body 40 includes a pivot end 60 and a free end 62. The pivot end 60 includes pivot arms 64 having pivot pins 66 that pivotally fit within corresponding openings 68 defined by the tray mounting member 22. The free end 62 is positioned opposite from the pivot end 60. A plurality of fixation module mounting locations 70 are positioned at the pivot end 60 of the tray main body 40. The fixation module mounting locations 70 include a first fixation module mounting location70A, a second fixation module mounting location 70B, a third fixation module mounting location 70C and a fourth fixation module mounting location 70D. The fixation module mounting locations 70 are laterally spaced-apart from one another across a width W of the tray main body 40. The width W is parallel to the lateral orientation 30. The side wall structure 44 does not extend across the width W of the tray main body 40 adjacent the pivot end 60.

Referring to Figure 6 and 6A, module mounting openings 80 are provided at each of the fixation module mounting locations 70. The module mounting openings 80 corresponding to each fixation module mounting location 70 can include a first mounting opening 80A and a second mounting opening 80B. The mounting openings 80 extend through the base 42 of the tray main body 40 and are adjacent to the pivot end 60 of the tray main body 40.

Referring back to Figure 2, the transport tube mounting locations 26 are provided on transport tube fixation modules 90 attached to the fixation module mounting locations 70 of the fiber management trays 24. For example, a first fixation module 90A is shown attached to the tray main body 40 of the first fiber management tray 24A, a second fixation module 90B is shown attached to the tray main body 40 of the second fiber management tray 24B and a third fixation module 90C is shown attached to the tray main body 40 of the third fiber management tray 24C. The first fixation module 90A is shown mounted at the first fixation module location 70A of the first fiber management tray 24A. The second fixation module 90B is shown mounted at the second fixation module mounting location 70B of the second fiber management tray 24B. The third fixation module 90C is shown mounted at the first fixation module mounting location 70A of the third fiber management tray 24C. By selectively mounting the fixation modules 90 of adjacent fiber management trays 24 at different fixation module mounting locations 70, the tray stack can be customized to laterally stagger the transport tube mounting locations 26 of adjacent trays 24 in the stack.

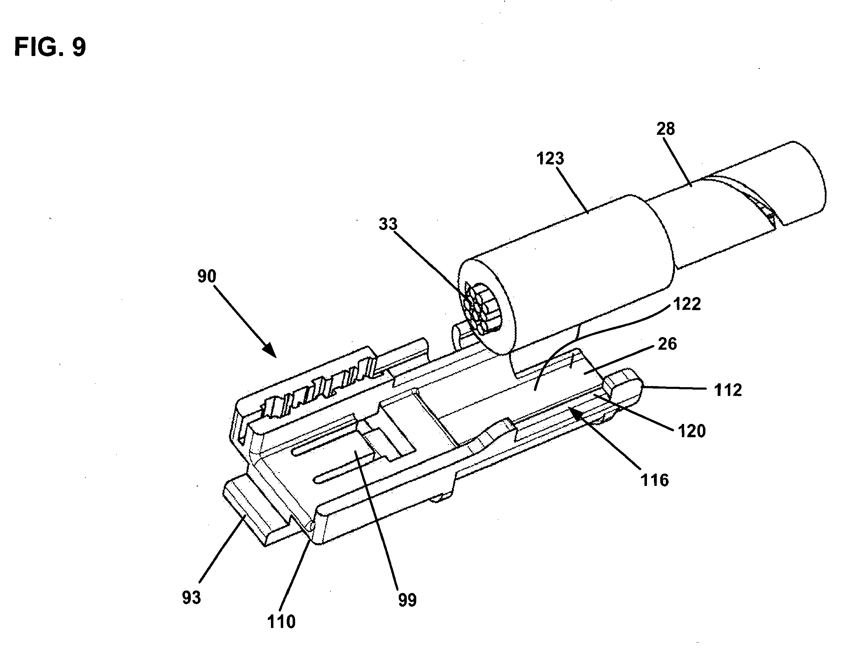

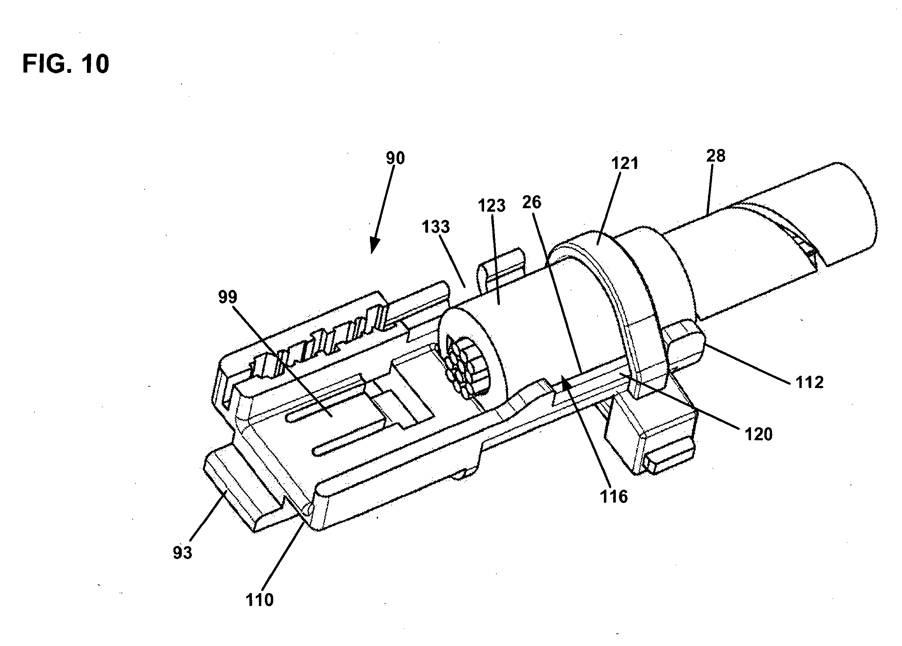

Referring back to Figures 6 and 6A, the fixation modules 90 can be mounted at any one of the four separate fixation module mounting locations 70 on a given tray main body 40. Preferably, the fixation module mounting locations 70 are selected taking into account the fixation module mounting locations 70 used on adjacent trays 24 so that a desired stagger can be achieved. In certain embodiments, the fixation modules 90 can be secured at the fixation module mounting locations 70 by detachable connections. In certain embodiments, the detachable connection includes snap-fit connections. For example, referring to Figures 9-12, the depicted fixation module 90 includes a tray attachment interface 91 at a bottom side of the fixation module 90. The tray attachment interface 91 includes a first catch 93, a second catch 95, a bottom shoulder 97 and a flexible latch 99 (e.g., a flexible latching arm) having a retention tab 101 including an angled face 103 and a retention surface 105. To mount one of the fixation modules 90 to a fixation module mounting location 70, the fixation module 90 is positioned as shown at Figure 6A with the tray attachment interface 91 above the selected fixation module mounting location 70 (e.g., the first fixation module mounting location 70A as shown at Figure 6A). The fixation module 90 is then lowered to insert the first catch 93 in the first opening 80A of the fixation module mounting location 70. The fixation module 90 is then slid forwardly relative to the tray main body 40 such that the first and second catches 93, 95 slide under the base 42. Concurrently, the angled face 103 engages the base 42 causing the flexible latch 99 to flex upwardly. When the retention tab 101 is fully over the second opening 80B, the flexible latch 99 elastically snaps down to a retention position where the retention tab 101 fits in the second opening 80B and the retention surface 105 restricts rearward movement of the fixation module 90 relative to the tray main body 40. Concurrently, the bottom shoulder 97 abuts against a rear edge 107 of the tray main body 40 to limit forward movement of the fixation module 90 relative to the tray main body 40. Figures 7 and 7A show the fixation module 90 in the attached position. By flexing the flexible latch 99 upwardly, the retention tab 101 can be disengaged from the second opening 80B and the fixation module can be disconnected from the tray main body 40.

Each of the transport tube fixation modules 90 can include a first end 110 and an opposite second end 112. The tray attachment interface 91 is adjacent the first end 110 and a tube mounting portion 116 is adjacent the second end 110. The tube mounting portion 116 defines the tube mounting location 26 for supporting the optical fiber transport tube 28 secured to the transport tube fixation module 90. The tube mounting portion 116 of the first fixation module 90A defines the first transport tube mounting location 26A, the tube mounting portion 116 of the second fixation module 90B defines the second transport tube mounting location 26B and the third fixation module 90C defines the third transport tube mounting location 26C. The tube mounting portions 116 project outwardly from the perimeters 43 of the tray main bodies 40 when the transport tube fixation modules 90 are mounted at the fixation module mounting locations 70.

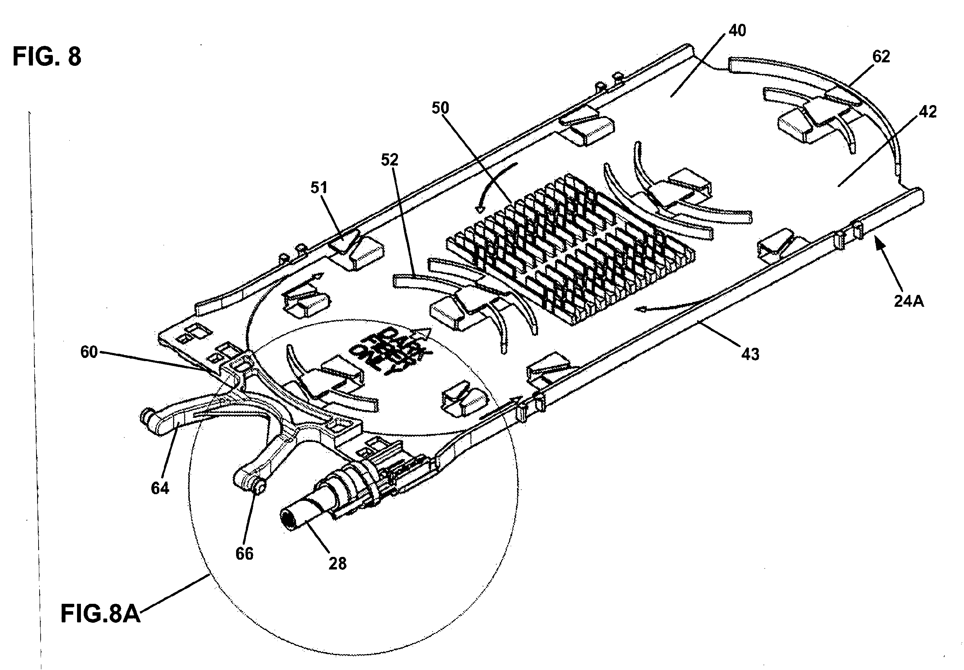

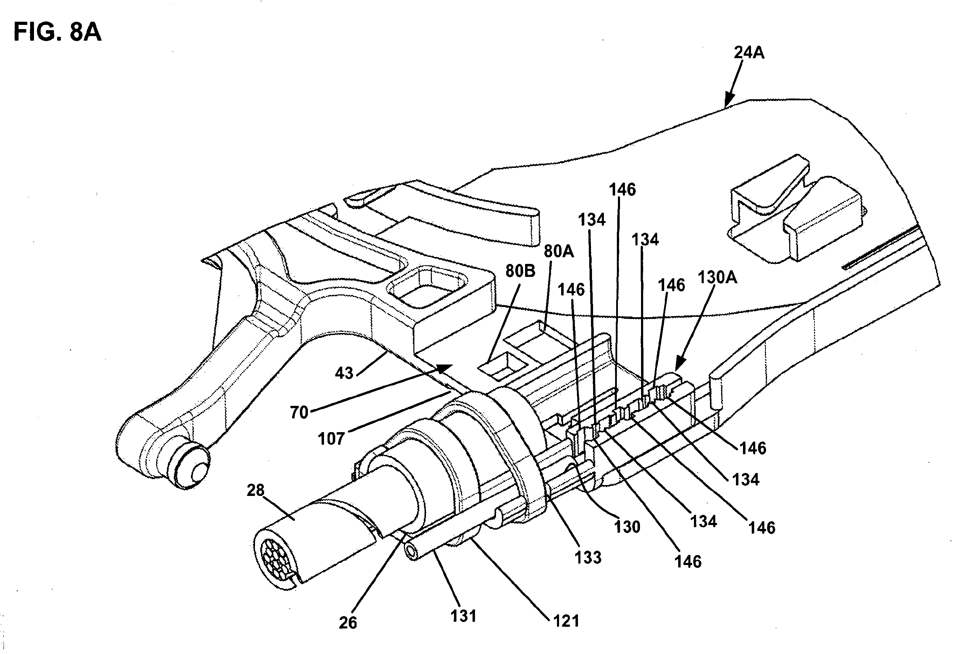

In certain embodiments, the tube mounting portion 116 of each fixation module 90 includes a first notch 120 for receiving a tube tie-down member 121 (e.g., a cable tie, a tie wrap, etc.) used to secure the corresponding transport tube 28 to the tube mounting portion 116 of the fixation module 90. The tube mounting portion 116 also includes a recess 122 for receiving a tube end 124 of the corresponding optical fiber transport tube 28. The recess 122 allows the bottom of the inner diameter of the fiber transport tube 28 to be generally flush with a top side of the fixation module 90. In this way, optical fibers 33 routed out of the optical fiber transport tube 28 and onto the top side of the fixation module 90 do not experience microbending. As shown in Figures 8 and 9, a foam layer 123 can be wrapped around the tube end 124 of the optical fiber transport tube 28 to facilitate securing the transport tube 28 to the fixation module 90 with a tie-down member 121.

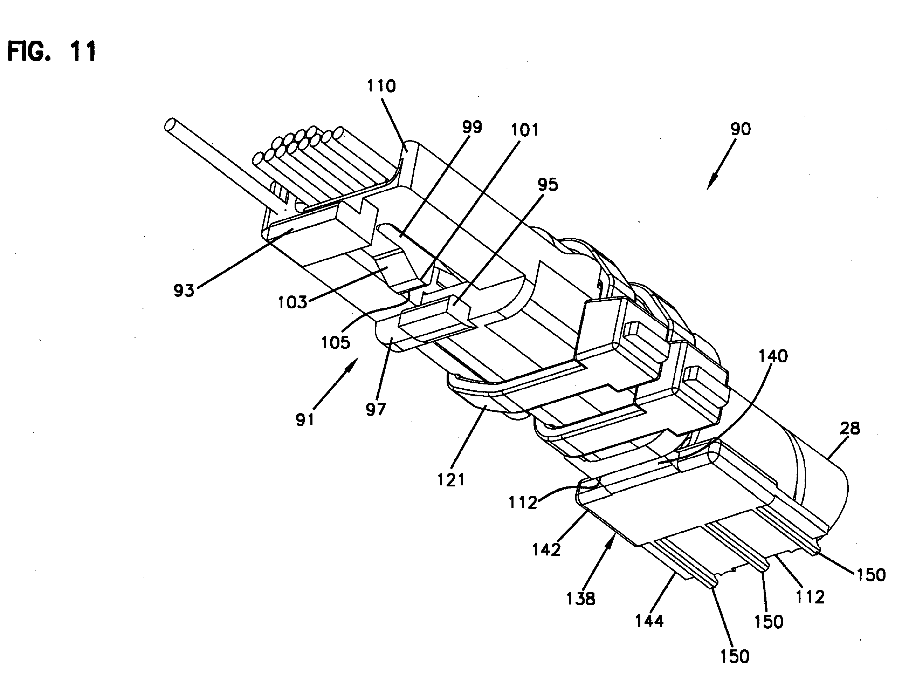

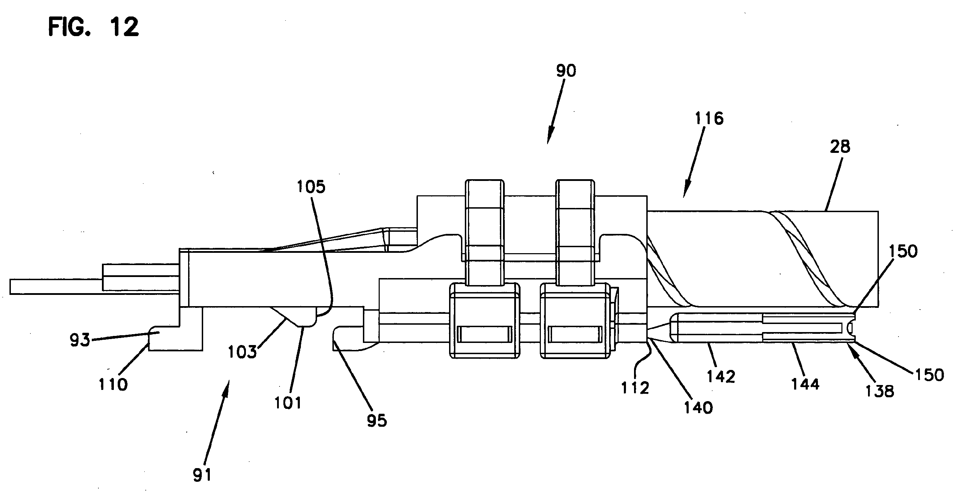

As shown at Figure 7 and 8, the fixation modules 90 also include separate fiber routing channels 130 for receiving optical fibers 131 routed outside the optical fiber transport tube 90. Second notches 133 can be defined along fiber routing channels 130 for receiving tie downs used for securing the optical fibers 131 to the fixation modules 90. The channels 130 are useful for routing additional fibers 131 to the fiber management trays 24 without having to disturb the optical fibers 33 within the optical fiber transport tubes 28. Each channel 130 can also include a retention portion 130A (see Figure 8A) having retention members 134 (e.g., projections, ribs, gripping elements, etc.) that project into the retention portion 130A of the channel 130 and frictionally engage the fiber 131 when the optical fiber 131 is pressed/forced downwardly into the retention portion 130A of the channel 130. As shown at Figures 11 and 12, the fixation module 90 can also include a disposable tool 138 that is attached to the second end 112 by a detachable connection 140 (e.g., the disposable tool 138 can be snapped off the second end 112). The disposable tool 138 includes a handle 142 and insertion portion 144. The insertion portion 144 is configured to be downwardly inserted into the retention portion 130A for use in pressing the optical fiber 131 into the retention portion 130A. The retention portion 130A also includes guide slots 146 (see Figure 8A) that receive ribs 150 (see Figures 11 and 12) on the insertion portion 144 to facilitate guiding the insertion portion 144 into the retention portion 130A as the insertion portion 144 is inserted vertically downwardly into the retention portion 130A to press the fiber 131 downwardly into the retention portion 130A.

### PARTS LIST

- 20: Fiber management device
- 22: Tray mounting member
- 24: Fiber management tray
- 24A: First fiber management tray
- 24B: Second fiber management tray
- 24C: Third Fiber management tray
- 25: Top side
- 26: Transport tube mounting location
- 26A: First transport tube mounting location
- 26B: Second transport tube mounting location
- 26C: Third transport tube mounting location
- 28: Optical fiber transport tube
- 28A: First transport tube
- 28B: Second Transport tube
- 28C: Third transport tube
- 30: Lateral orientation
- 33: Optical fibers
- P1: First reference plane
- P2: Second reference plane
- P3: Third reference plane
- P4: Fourth reference plane
- H1: First height
- H2: Second height
- H3: Third height
- 40: Tray main body
- 42: Base
- 43: Perimeter
- 44: Sidewall structure
- 46: Interior region
- 48: Fiber routing path
- 50: Optical component mounting location
- 51: Tabs
- 52: Fiber guide member
- 60: Pivot end
- 62: Free end
- 64: Pivot arm
- 66: Pivot pins
- 68: Openings
- 70: Fixation module mounting locations
- 70A: First fixation module mounting location
- 70B: Second fixation module mounting location
- 70C: Third fixation module mounting location
- 70D: Fourth fixation module mounting location
- W: Width
- 80: Module mounting openings
- 80A: First mounting opening
- 80B: Second mounting opening
- 90: Fixation module
- 90A: First fixation module
- 90B: Second fixation module
- 90C: Third fixation module
- 91: Attachment interface
- 93: First catch
- 95: Second catch
- 97: Bottom shoulder
- 99: Flexible latch
- 101: Retention tab
- 103: Angled face
- 105: Retention surface
- 107: Rear edge
- 110: First end
- 112: Second end
- 116: Tube mounting portion
- 120: First notch
- 121: Tube tie-down member
- 122: Recess
- 123: Foam layer
- 124: Tube end
- 130: Fiber routing channel
- 130A: Retention portion
- 131: Optical fiber
- 133: Second notch
- 134: Retention members
- 138: Disposable tool
- 140: Detachable connection
- 142: Handle
- 144: Insertion portion
- 146: Guide slots
- 150: ribs 150

## Claims

1. A fiber management device (20) comprising a first fiber management tray (24A) defining at least one optical fiber routing path (48) and an optical component mounting location (50), the first fiber management tray (24A) includes a tray main body (40)
defining a plurality of fixation module mounting locations (70) comprising means for mounting a fixation module (90A), and that are laterally spaced- X apart from one another on the tray main body (40), the first fiber management tray (24A) also including a first fixation module (90A) comprising means for mounting said module (90A) at a selected one of the fixation module mounting locations (70) of the tray main body (40), the first fixation module (90A) defining a transport tube mounting location (26) for supporting an optical fiber transport tube (28) secured to the first fixation module (90A),
**characterized in that**
the first fixation module (90A) includes a first end (110) and an opposite second end (112), wherein the first fixation module (90A) includes a tray attachment interface (91) adjacent the first end (110) and a tube mounting portion (116) adjacent the second end (112), wherein the tray attachment interface (91) is configured to attach to the tray main body (40) at the selected fixation module mounting location (70), wherein the tube mounting portion (116) defines the transport tube mounting location (26), and wherein the tube mounting portion (116) of the first fixation module (90A) projects outwardly from a perimeter (43) of the tray main body (40) when the first fixation module (90A) is mounted to the tray main body (40).

2. The fiber management device (20) of claim 1, wherein the first fixation module (90A) is attachable and detachable from the tray main body (40).

3. The fiber management device (20) of claims 1 or 2, wherein the first fixation module (90A) snaps to the tray main body (40).

4. The fiber management device (20) of one of the foregoing claims, wherein the tube mounting portion (116) of the first fixation module (90A) includes a first notch (120) for receiving a tube tie-down member (121) used to secure the optical fiber transport tube (28) to the tube mounting portion (116).

5. The fiber management device (20) of one of the foregoing claims, wherein the tube mounting portion (116) includes a recess (122) for receiving an end (124) of the optical fiber transport tube (28).

6. The fiber management device (20) of one of the foregoing claims, wherein the tray main body (40) defines a tray height (H1) between first and second reference planes (P1, P2), and wherein the optical fiber transport tube (28) has an outer dimension (OD) extending in the same orientation as the tray height (H1) that is larger than the tray height (H1).

7. The fiber management device (20) of one of the foregoing claims, wherein the first fixation module (90A) includes a separate fiber routing channel (130) for receiving an optical fiber (131) routed outside the optical fiber transport tube (28).

8. The fiber management device (20) of claim 1-8, wherein each of the fixation module mounting locations (70) includes at least one mounting opening (80) configured to receive a latch (99) of the first fixation module (90A).

9. The fiber management device (20) of claim 1-8, wherein each of the fixation module mounting locations (70) includes a pair of mounting openings (80A, 80B).

10. The fiber management device (20) of claims 1-9, wherein a second fiber management tray (24B) is stacked on the first fiber management tray (24A), wherein the second fiber management tray (24B) includes a second fixation module (90B), and wherein the second fixation module (90B) is staggered along a lateral orientation (30) relative to the first fixation module (90A) such that a clearance region (32A) is provided above the first fixation module (90A), and wherein the clearance region (32A) allows the optical fiber transport tube (28) to extend past a reference plane (P2) defined between first and second fiber management trays (24A, 24B) without preventing the first and second trays (24A, 24B) from being closely stacked relative to one another.

11. A method for using the fiber management device (20) of claim 1, the fiber management device (20) including a second fiber management tray (24B) is stacked on the first fiber management tray (24A), the second fiber management tray (24B) including a second fixation module (90B) and a tray main body (40), the main body (40) of the first fiber management device (20) having a tray height (H1), the method comprising:
attaching the first fixation module (90A) to a first fixation module mounting location (70A) of the tray main body (40) of the first fiber management tray (24A) and attaching the second fixation module (90B) to a second fixation module mounting location (70B) of the tray main body (40) of the second fiber management tray (24B), the first and second fixation module mounting locations (70A, 70B) being laterally staggered relative to one another; and
securing a first optical fiber transport tube (28A) to the first fixation module (90A) and a second optical fiber transport tube (28) to the second fixation module (90B), at least the first optical fiber transport tube (28A) having an outer dimension (OD) extending in the same orientation as the tray height (H1) that is larger than the tray height (H1).

## Patentansprüche

1. Faserverwaltungsvorrichtung (20), die einen ersten Faserverwaltungseinsatz (24A) umfasst, der wenigstens eine Lichtwellenleiter-Führungsbahn (48) und eine Anbringungsposition (50) für optische Bauelemente definiert, wobei der erste Faserverwaltungseinsatz (24A) einen Einsatz-Hauptkorpus (40) einschließt, der mehrere Befestigungsmodul-Anbringungspositionen (70) einschließt, die Mittel zum Anbringen eines Befestigungsmoduls (90A) umfassen und die mit seitlichem Abstand entfernt voneinander an dem Einsatz-Hauptkorpus (40) angeordnet sind, wobei der erste Faserverwaltungseinsatz (24A) ebenfalls ein erstes Befestigungsmodul (90A) umfasst, das Mittel zum Anbringen des Moduls (90A) an einer ausgewählten der Befestigungsmodul-Anbringungspositionen (70) des Einsatz-Hauptkorpus (40) umfasst, wobei das erste Befestigungsmodul (90A) eine Beförderungsröhren-Anbringungsposition (26) zum Tragen einer Lichtwellenleiter-Beförderungsröhre (28), die an dem ersten Befestigungsmodul (90A) befestigt ist, definiert,
**dadurch gekennzeichnet, dass**
das erste Befestigungsmodul (90A) ein erstes Ende (110) und ein entgegengesetztes zweites Ende (112) einschließt, wobei das erste Befestigungsmodul (90A) eine Einsatz-Befestigungsschnittstelle (91) angrenzend an das erste Ende (110) und einen Röhren-Anbringungsabschnitt (116) angrenzend an das zweite Ende (112) einschließt, wobei die Einsatz-Befestigungsschnittstelle (91) dafür konfiguriert ist, an der ausgewählten Befestigungsmodul-Anbringungsposition (70) an dem Einsatz-Hauptkorpus (40) befestigt zu werden, wobei der Röhren-Anbringungsabschnitt (116) die Beförderungsröhren-Anbringungsposition (26) definiert und wobei der Röhren-Anbringungsabschnitt (116) des ersten Befestigungsmoduls (90A) von einem Umfang (43) des Einsatz-Hauptkorpus (40) nach außen vorspringt, wenn das erste Befestigungsmodul (90A) an dem Einsatz-Hauptkorpus (40) angebracht ist.

2. Faserverwaltungsvorrichtung (20) nach Anspruch 1, wobei das erste Befestigungsmodul (90A) an dem Einsatz-Hauptkorpus (40) befestigt und von demselben gelöst werden kann.

3. Faserverwaltungsvorrichtung (20) nach Anspruch 1 oder 2, wobei das erste Befestigungsmodul (90A) an dem Einsatz-Hauptkorpus (40) einrastet.

4. Faserverwaltungsvorrichtung (20) nach einem der vorhergehenden Ansprüche, wobei der Röhren-Anbringungsabschnitt (116) des ersten Befestigungsmodul (90A) eine erste Kerbe (120) zum Aufnehmen eines Röhren-Anbindungselement (121) einschließt, das dazu verwendet wird, die Lichtwellenleiter-Beförderungsröhre (28) an dem Röhren-Anbringungsabschnitt (116) zu befestigen.

5. Faserverwaltungsvorrichtung (20) nach einem der vorhergehenden Ansprüche, wobei der Röhren-Anbringungsabschnitt (116) eine Aussparung (122) zum Aufnehmen eines Endes (124) der Lichtwellenleiter-Beförderungsröhre (28) einschließt.

6. Faserverwaltungsvorrichtung (20) nach einem der vorhergehenden Ansprüche, wobei der Einsatz-Hauptkorpus (40) eine Einsatzhöhe (H1) zwischen einer ersten und einer zweiten Bezugsebene (P1, P2) definiert und wobei die Lichtwellenleiter-Beförderungsröhre (28) eine sich in der gleichen Ausrichtung wie die Einsatzhöhe (H1) erstreckende äußere Abmessung (OD) hat, die größer ist als die Einsatzhöhe (H1).

7. Faserverwaltungsvorrichtung (20) nach einem der vorhergehenden Ansprüche, wobei das erste Befestigungsmodul (90A) einen gesonderten Faserführungskanal (130) zum Aufnehmen eines außerhalb der Lichtwellenleiter-Beförderungsröhre (28) geführten Lichtwellenleiters (131) einschließt.

8. Faserverwaltungsvorrichtung (20) nach einem der Ansprüche 1 bis 7, wobei jede der Befestigungsmodul-Anbringungspositionen (70) wenigstens eine Anbringungsöffnung (80) einschließt, die dafür konfiguriert ist, eine Klinke (99) des ersten Befestigungsmoduls (90A) aufzunehmen.

9. Faserverwaltungsvorrichtung (20) nach einem der Ansprüche 1 bis 8, wobei jede der Befestigungsmodul-Anbringungspositionen (70) ein Paar von Anbringungsöffnungen (80) einschließt.

10. Faserverwaltungsvorrichtung (20) nach einem der Ansprüche 1 bis 9, wobei ein zweiter Faserverwaltungseinsatz (24B) auf den ersten Faserverwaltungseinsatz (24A) gestapelt ist, wobei der zweite Faserverwaltungseinsatz (24B) ein zweites Befestigungsmodul (90B) einschließt und wobei das zweite Befestigungsmodul (90B) entlang einer seitlichen Ausrichtung (30) im Verhältnis zu dem ersten Befestigungsmodul (90A) gestapelt ist derart, dass ein Zwischenraumbereich (32A) oberhalb des ersten Befestigungsmoduls (90A) bereitgestellt wird und wobei der Zwischenraumbereich (32A) ermöglicht, dass sich die Lichtwellenleiter-Beförderungsröhre (28) an einer Bezugsebene (P2) vorbei erstreckt, die zwischen dem ersten und dem zweiten Faserverwaltungseinsatz (24A, 24B) definiert ist, ohne zu verhindern, dass der erste und der zweiten Einsatz (24A, 24B) eng im Verhältnis zueinander gestapelt sind.

11. Verfahren zur Verwendung der Faserverwaltungsvorrichtung (20) nach Anspruch 1, wobei die Faserverwaltungsvorrichtung (20) ein zweiter Faserverwaltungseinsatz (24B) auf den ersten Faserverwaltungseinsatz (24A) gestapelt ist, wobei der zweite Faserverwaltungseinsatz (24B) ein zweites Befestigungsmodul (90B) und einen Einsatzhauptkorpus (40) einschließt, wobei der Hauptkorpus (40) der ersten Faserverwaltungsvorrichtung (20) eine Einsatzhöhe (H1) hat, wobei das Verfahren Folgendes umfasst:
das Befestigen des ersten Befestigungsmoduls (90A) an einer ersten Befestigungsmodul-Anbringungsposition (70A) des Einsatzhauptkorpus (40) des ersten Faserverwaltungseinsatzes (24A) und das Befestigen des zweiten Befestigungsmoduls (90B) an einer ersten Befestigungsmodul-Anbringungsposition (70B) des Einsatzhauptkorpus (40) des zweiten Faserverwaltungseinsatzes (24B), wobei die erste und die zweite Befestigungsmodul-Anbringungsposition (70A, 70B) seitlich im Verhältnis zueinander versetzt sind, und
das Befestigen einer ersten Lichtwellenleiter-Beförderungsröhre (28A) an dem ersten Befestigungsmodul (90A) und einer zweiten Lichtwellenleiter-Beförderungsröhre (28B) an dem zweiten Befestigungsmodul (90B), wobei wenigsten die erste Lichtwellenleiter-Beförderungsröhre (28A) eine sich in der gleichen Ausrichtung wie die Einsatzhöhe (H1) erstreckende äußere Abmessung (OD) hat, die größer ist als die Einsatzhöhe (H1).

## Revendications

1. Dispositif de gestion de fibres (20) comprenant un premier plateau de gestion de fibres (24A) définissant au moins un trajet d'acheminement de fibre optique (48) et un emplacement de montage de composant optique (50), le premier plateau de gestion de fibres (24A) inclut un corps principal de plateau (40) définissant une pluralité d'emplacements de montage de module de fixation (70) comprenant un moyen de montage d'un module de fixation (90A) et qui sont espacés latéralement les uns des autres sur le corps principal de plateau (40), le premier plateau de gestion de fibres (24A) incluant également un premier module de fixation (90A) comprenant un moyen de montage dudit module (90A) au niveau d'un emplacement choisi parmi les emplacements de montage de module de fixation (70) du corps principal de plateau (40), le premier module de fixation (90A) définissant un emplacement de montage de tube de transport (26) destiné à supporter un tube de transport de fibres optiques (28) attaché sur le premier module de fixation (90A),
**caractérisé par le fait que** le premier module de fixation (90A) comporte une première extrémité (110) et une seconde extrémité (112) opposée, dans lequel le premier module de fixation (90A) comporte une interface de fixation à un plateau (91) adjacente à la première extrémité (110) et une partie de montage de tube (116) adjacente à la seconde extrémité (112), dans lequel l'interface de fixation à un plateau (91) est configurée pour être fixée au corps principal de plateau (40) au niveau de l'emplacement de montage de module de fixation (70) choisi, dans lequel la partie de montage de tube (116) définit l'emplacement de montage de tube de transport (26) et dans lequel la partie de montage de tube (116) du premier module de fixation (90A) fait saillie sur l'extérieur d'un périmètre (43) du corps principal de plateau (40) lorsque le premier module de fixation (90A) est monté sur le corps principal de plateau (40).

2. Dispositif de gestion de fibres (20) selon la revendication 1, dans lequel le premier module de fixation (90A) peut être fixé au corps principal de plateau (40) et détaché de celui-ci.

3. Dispositif de gestion de fibres (20) selon la revendication 1 ou 2, dans lequel le premier module de fixation (90A) s'encliquète sur le corps principal de plateau (40).

4. Dispositif de gestion de fibres (20) selon l'une des revendications précédentes, dans lequel la partie de montage de tube (116) du premier module de fixation (90A) comporte une première encoche (120) permettant de recevoir un élément d'attache de tube (121) utilisé pour attacher le tube de transport de fibres optiques (28) sur la partie de montage de tube (116).

5. Dispositif de gestion de fibres (20) selon l'une des revendications précédentes, dans lequel la partie de montage de tube (116) comporte une cavité (122) destinée à recevoir une extrémité (124) du tube de transport de fibres optiques (28).

6. Dispositif de gestion de fibres (20) selon l'une des revendications précédentes, dans lequel le corps principal de plateau (40) définit une hauteur de plateau (H1) entre un premier et un second plan de référence (P1, P2) et dans lequel le tube de transport de fibres optiques (28) a une dimension extérieure (OD), dans le même sens que la hauteur de plateau (H1), qui est supérieure à la hauteur de plateau (H1).

7. Dispositif de gestion de fibres (20) selon l'une des revendications précédentes, dans lequel le premier module de fixation (90A) comporte un canal d'acheminement de fibre séparé (130) destiné à recevoir une fibre optique (131) acheminée à l'extérieur du tube de transport de fibres optiques (28).

8. Dispositif de gestion de fibres (20) selon les revendications 1-8, dans lequel chacun des emplacements de montage de module de fixation (70) comporte au moins une ouverture de montage (80) configurée pour recevoir un élément de verrouillage (99) du premier module de fixation (90A).

9. Dispositif de gestion de fibres (20) selon les revendications 1-8, dans lequel chacun des emplacements de montage de module de fixation (70) comporte deux ouvertures de montage (80A, 80B).

10. Dispositif de gestion de fibres (20) selon les revendications 1-9, dans lequel un second plateau de gestion de fibres (24B) est empilé sur le premier plateau de gestion de fibres (24A), dans lequel le second plateau de gestion de fibres (24B) inclut un second module de fixation (90B), et dans lequel le second module de fixation (90B) est décalé dans une direction latérale (30) par rapport au premier module de fixation (90A) de manière à ménager une zone de dégagement (32A) au-dessus du premier module de fixation (90A), et dans lequel la zone de dégagement (32A) permet au tube de transport de fibres optiques (28) de s'étendre au-delà d'un plan de référence (P2) défini entre les premier et second plateaux de gestion de fibres (24A, 24B) sans empêcher les premier et second plateaux (24A, 24B) d'être empilés serrés l'un par rapport à l'autre.

11. Procédé d'utilisation du dispositif de gestion de fibres (20) selon la revendication 1, le dispositif de gestion de fibres (20) incluant un second plateau de gestion de fibres (24B) empilé sur le premier plateau de gestion de fibres (24A), le second plateau de gestion de fibres (24B) incluant un second module de fixation (90B) et un corps principal de plateau (40), le corps principal (40) du premier dispositif de gestion de fibres (20) ayant une hauteur de plateau (H1), le procédé comprenant:
la fixation du premier module de fixation (90A) sur un premier emplacement de montage de module de fixation (70A) du corps principal de plateau (40) du premier plateau de gestion de fibres (24A) et la fixation du second module de fixation (90b) sur un second emplacement de montage de module de fixation (70B) du corps principal de plateau (40) du second plateau de gestion de fibres (24B), les premier et second emplacements de montage de module de fixation (70A, 70 B) étant décalés latéralement l'un par rapport à l'autre; et
l'attache d'un premier tube de transport de fibres optiques (28A) sur le premier module de fixation (90A) et d'un second tube de transport de fibres optiques (28B) sur le second module de fixation (90B), au moins le premier tube de transport de fibres optiques (28A) ayant une dimension extérieure (OD), dans le même sens que la hauteur de plateau (H1), qui est supérieure à la hauteur de plateau (H1).
